# EUROPEAN PATENT SPECIFICATION

(11) **EP 1 230 978 B1**
(45) Date of publication and mention of the grant of the patent: **28.09.2005**
(21) Application number: 02396016.4
(22) Date of filing: 12.02.2002
(51) Int. Cl.: B01J 35/04, B01J 19/32

(54) **Method for manufacturing a corrugated metal reactor packing**
Verfahren zur Herstellung einer Reaktorpackung aus gewelltem Blech
Procédé de fabrication d'un elément de garnissage en tole metallique ondulée pour réacteur

(30) Priority: 12.02.2001 FI 20010257; 12.02.2001 FI 20010258; 12.02.2001 FI 20010259
(43) Date of publication of application: 14.08.2002
(73) Proprietor: ECOCAT OY, 41331 Vihtavuori (FI)
(72) Inventor: Lylykangas, Reijo, 41330 Vihtavuori (FI); Vekki, Veli-Matti, 40800 Vaajakoski (FI); Keskitalo, Keijo, 40800 Vaajakoski (FI); Närhi, Erkki, 40800 Vaajakoski (FI)
(74) Representative: Heikkinen, Esko Juhani

(56) References cited:
- EP-A- 0 284 891
- WO-A-96/34188
- DE-A- 19 821 942
- GB-A- 1 546 097
- US-A- 4 765 047
- US-A- 5 068 218
- US-A- 5 124 086

## Description

### Background of the Invention

The present invention relates to a method for manufacturing metal reactor cell useful for the treatment of gases, and the manufacturing method thereof.

Reactor cells having channels through which gas is passed are widely used in the treatment of gases, for instance in the purification of exhaust and flue gases. On the surfaces of the channels, there are active agents such as catalysts. Such reactor cells may be made from metal sheets. The sheets are coated with ceramic porous support, to which the active metals or metal oxides are immobilized. Also fully ceramic reactor cells are being manufactured.

Metal reactor cells are commonly preoxidised in order to join sol on sheets. E.g. patent publication GB-A-1546097 describes a method for manufacturing a metal body. In this method strips were corrugated and then wound into the completed body. The completed body was then degreased and oxidized by heating it in air to about 1000°C to form an alumina layer on its surfaces. The completed pre-oxidised bodies were then dipped into alumina sol in order to join it on the alumina surface of the strips.

Mechanical requirements imposed on such a reactor cell are getting higher due to increasingly stricter regulations concerning the protection of the atmosphere. For instance to purify exhaust gases, the reactor cell is adjusted as close to the engine as possible to guarantee an adequate performance thereof. The reactor cell is thus subjected to very high temperature and pressure changes. In general, the temperatures in reactor cells close to the engine are high since the purpose is to burn the fuel at a high temperature with a minimal amount of air.

In a metal reactor, pressure losses cell are low, geometrical surface area for reactions is high, and thus the operation thereof will start more quickly in comparison with a ceramic cell. A ceramic reactor cell is mechanically relatively strong, but joining it for instance to a housing may cause problems. Normally, ceramic reactor cells are only made in form of so-called straight cells where the thermal and mass transfer properties of gases are not optimal for the gas treatment.

In metal reactor cells, corrugated sheets are often used, the sheets being either wound or bent to an S-form together with flat sheets. The reactor cell is combined with a housing in the gas line either with welding or soldering joints on the housing, or with strips or rods within the housing. A reactor cell having corrugated sheets overlapping flat sheets and they are joined together with weld joints at the edges of the sheets is currently in use. Further, a reactor cell having corrugated sheets connected to each other with very widely separated soldering or welding joints is known.

The reactor cell becomes mechanically particularly strong if the joints of the corrugations are as close to each other as possible. Patent publication EP-A-0284891 describes a method for producing a catalytic converter comprising a stack of corrugated metal foil. The number of joints are optimized in order to provide a stack of corrugated foil which is uniform and has no weak areas.

The resistance of the reactor cell is tested with accelerated tests wherein the reactor cell is exposed to very quick temperature and pressure changes. Commercially available reactor cells for the purification of exhaust gases withstand undamaged only few hours most demanding test conditions of this kind. In future, reactor cells should resist such test conditions for tens or even for hundreds of hours.

### Disclosure of the Invention

A method for manufacturing a reactor cell that is also particularly resistant to demanding conditions and useful for the treatment of gases has now been invented.

For this purpose, the invention is characterized in facts presented in the independent claim. Some preferable embodiments of the invention are disclosed in other claims.

In this invention, a corrugated sheet means any sheet with a corrugation. A corrugation refers to any part of the sheet having a surface on a different level relative to the middle plane of the sheet. A corrugated sheet may comprise impressions or depressions as corrugations. The corrugated sheet may also be a profiled sheet made from a flat sheet by bending or pressing symmetrically or unsymmetrically relative to the middle plane of the sheet. The profiles may for instance be corrugations or the sheet may comprise profiles in V-form. As for the other sheet, it may be any different sheet that may be joined to the corrugated sheet. This another sheet may be a corrugated sheet or for instance a flat sheet, perforated sheet or a mesh sheet. This another sheet may also be a sheet made from the corrugated sheet by bending or winding the sheet formed.

The corrugations of the corrugated sheet may have different shapes and sizes at different points of an individual corrugated sheet. In separate corrugated sheets, the corrugations may also have different shapes and sizes. It is thus possible to assemble a reactor cell having at its center densely corrugated sheets that are very close to one another, and at its edges thinly corrugated sheets that are more widely spaced apart. With such a solution, the flows within the reactor cell may be controlled.

In this patent application, the direction of the corrugation refers to the direction in which the plane of the surface of the corrugation differs most from the plane of the surface of the sheet adjacent to the corrugation. In a profiled sheet, the direction of the corrugation is the direction of the corrugations or grooves of the profile. The directions of the corrugations determine the directions of the channels formed between the sheets. Thus, the corrugation substantially influences the flow of the gas being treated in the channels of the reactor cell.

The corrugation shapes, sizes and directions of the reactor cell sheets as well as the density of openings in the reactor cell cross section are selected according to the inteded application. The reactor cell may also have many different shapes, it may e.g. be a spiral, bent to S-, J- or V-form or stacked or bent reactor cell. The density of the openings may for instance be 1 to 300 openings per cm², preferably 1 - 10 or 10 - 50 or 50 - 100 or 100 - 300 openings per cm². Further, the thickness of the sheet may vary. In this manner, reactor cells with very different flow properties may be accomplished. The cross section of the housing may be varied freely according to the intended application. It may for instance be circular, oval or semiparallelogram. Sizes and shapes of the housings conventional in the art may be preferably used.

For the treatment of exhaust gases, the material of the reactor cell sheets may for instance be ferritic iron-chromium-aluminium alloy, e.g. WI.4767. The cells may also be made of so-called austenitic superalloy W2.4633 having high nickel and chromium content , for example.

The reactor cell prepared by the method of the invention may be placed in a housing having a shape corresponding to that of the reactor cell. Thus, the number of so-called dead centers or bypass points in the housing are minimized. This solution also improves the performance of the reactor cell. The applicability of the invention thus becomes more versatile.

A corrugated sheet is mechanically more rigid and stronger than a flat one. The corrugations of the sheet may also reduce the resonances in the reactor cell due to e.g. the gas flow. The corrugations of the sheet increase the contact surface of the reactor cell thus making the operation thereof more efficient. Moreover, the profiled sheet has the inherent property to yield internally in case of e.g. thermal expansion. The joints are thus not broken as easily as the joints on surfaces of flat sheets.

Joining the sheets together may be carried out by welding such as by resistance welding or beam welding. Said welding techniques are particularly suitable for manufacturing reactor cells since they allow high numbers of sheets to be joined together quickly and locally. Sheets may also be joined together by soldering.

The cell prepared by the method of the invention is mechanically substantially stronger than any known metal reactor cell. The service life thereof in highly demanding engine tests is even 5 to 10 times longer than service lives of commercially available rivaling products. It may be placed directly adjacent to the engine since it withstands even extremely variable conditions for long periods of time without breaking.

The reactor cell prepared by using the method of the invention may also be made from relatively thin sheets thus decreasing the thermal mass thereof. Accordingly, the reactor cell warms up and thus the operation thereof also starts more quickly. Accordingly, the performance thereof under extremely demanding conditions is very good. The pressure loss in the reactor cell of the invention made from thin sheets is also low. The thicknesses of the sheets may be for instance from 0.01 to 0.2 mm, such as from 0.02 to 0.05 mm. The heights of the corrugations may be e.g. between 0.2 and 5 mm, such as 0.1 to 2 mm.

A corrugated sheet of a reactor cell can be connected at least at one corrugation to another sheet with densely spaced joints in such a manner that channels are formed between the sheets. Joining the sheets together at corrugations makes the reactor cell substantially more rigid and mechanically particularly strong even under demanding conditions. The reactor cell becomes mechanically particularly strong if the joints of the corrugations are as close to each other as possible. This may be achieved for instance by joining the sheets together with 10 - 1000 joints per cm³, preferably with 10 - 50 or 50 - 200 or 200 - 500 or 500 - 1000 joints per cm³ of the reactor cell.

Corrugated sheets are joined together at the corrugations of said overlapping sheets with joints that are located at least at some corrugations of each corrugated sheet and spaced apart by intervals of 0.5 to 10 mm, the number of said joints between each overlapping corrugated sheets being 10 to 1000 per cm³.

The method of the invention comprises the preoxidation of the sheets. Preoxidation of the sheets was surprisingly found to improve the joining the sheets together especially by resistance welding. This preoxidation of the sheets may be carried out for instance by preannealing or chemical oxidation.

The sheet may be preoxidized by annealing for e.g. 0.1 - 10 hours at the temperature of 500 - 1000 °C, preferably for 1 - 3 hours at 700 - 800 °C. An alumina layer is thus formed on the sheets containing aluminium. This thin alumina layer improves the efficiency of resistance welding. Oxide layer may also be formed from other elements or compounds than aluminium.

An object of the invention is a method for manufacturing reactor cell having overlapping sheets, the overlapping corrugations of which lie at oblique angle relative to one another. The reactor cell is made resistant and effective by superimposing corrugated sheets and joining them together so as to contact the corrugations of the overlapping sheets with one another and to place said corrugations in different orientations relative to one another. In such a reactor cell, the contact area between the sheet surfaces and the exhaust gas to be purified is high and the performance is good.

Said overlapping corrugated sheets joined together and having corrugations in oblique angles relative to each other may be profiled sheets. The profiled sheets joined together contact one another only at the junctions of the corrugations. The reactor cell is made particularly strong by joining the profiled sheets together at oblique angles relative to the directions of the corrugations with e.g. welding or soldering joints spaced by intervals of 1 to 5 mm.

Profiled sheets having corrugations that are joined at an oblique angle relative to each other may be produced e.g. from a profiled sheet strip having profiles at an oblique angle relative to the edges of the strip. From this sheet strip, sheets having the shape of the reactor cell are cut and stacked one upon the other transversely relative to the profiles by turning every second sheet before stacking it. From this sheet strip, profiled sheets may be made by folding the strip on itself alternately in different directions. The profiles of the strip may typically lie at angles between 8 and 45 degrees relative to the edges of the strip, the profiles lying preferably at angles between 5 and 30 degrees. Accordingly, the directional angle between the corrugations of the profiled sheets joined together is preferably 10 to 60 degrees.

The gas being treated in a reactor cell made from overlapping profiled sheets joined together at an oblique angle also flows in the lateral direction of the sheets. Due to this fact, the gas is mixed and the flow distribution in the cell is equalized.

In a reactor cell made from profiled sheets, the directional angle between the corrugations thereof may be e.g. 5 to 90 degrees. The higher this angle is, the more the contact areas between the corrugated sheets are point-like. The reaction surface of the sheets is thus maximal. On the other hand, a wide profile angle may cause pressure losses in the flow of the substance or compound being treated due to excessive turbulences. The directional angle of the corrugations of the overlapping profiled sheets is preferably 20 to 60 degrees in the direction of the flow of the gas being treated, if for instance exhaust gases of combustion engine are treated.

A uniform flow distribution equalizes the temperatures in the reactor cell, and accordingly, internal temperature stresses are lower. A uniform flow distribution improves the operation of the reactor cell in general. This is favourable to the successful performance. By using in series several reactor cells having sheets at different orientations, the flows of gases may be equalized very well. Several such cells may also be connected in series. Such successive reactor cells having sheets at least partially transversely oriented relative to each other may have a spiral structure, a structure bent to an S-form, or they may comprise stacked corrugated sheets.

An object of the present invention is to connect the sheets and the reactor cell to a housing. The surface of the housing may be provided in the region of the reactor cell with connecting grooves that connect the sheets of the reactor cell to the inner surface of the housing. When providing the housing having a reactor cell therein with connecting grooves, the edges of the sheets will be oriented parallel to the housing. This stabilizes the connection between the housing and the reactor cell. In this case it is not necessary to join the sheets of the reactor cell to each other. Bypassing gas flows parallel to the inner wall of the housing are also prevented by the connecting grooves.

The number of the connecting grooves may for instance be 2 to 8. Said connecting grooves are preferably situated close to each other to minimize the thermal expansion between the reactor cell and the housing. Typically, the distance between the connecting grooves is 10 to 30 mm, the depth and width thereof being 0.5 to 2.0 mm. The connecting grooves are preferably situated substantially in the middle section of the reactor housing or at the inlet end of the housing relative to the flow direction of the gas being treated.

According to an object of the invention when making a connecting groove said connecting groove will orientate a sheet of the reactor cell parallel to the inside of the housing, and said sheet is also connected to the housing with one or several weld joints made on the bottom of the connecting groove through the housing.

The reactor cell may also be connected to the housing with welded joints, for instance by welding the reactor cell to the housing from outside. A particularly stable connection between the sheets and the reactor cell, and the housing is provided by carrying out the welding on the bottom of the connecting groove through the housing. Laser welding may preferably be used, TIG and MIG welding techniques being also useful.

According to the invention the reaction cell is connected to the housing or to part of it by weld joints made by resistance welding. The resistance welding can preferably be made simultaneously when joining sheets together by resistance welding. The resistance welding can be made so that the reaction cell is installed inside the housing and the whole reaction cell and the whole housing are welded together. The resistance welding can also be made preferably so that a half of the reaction cell is installed inside a half of the housing and these are welded together. After that a hole assay of the reaction cell and the housing can be connected by joining by welding two connected splits together.

An object of the present invention is the insertion of the reactor cell in a conical housing. To manufacture the reactor cell, the reactor may also be assembled in this conical housing by using sheets cut or bent into the form of the conical housing. The walls of the conical housing improve the rigidity of the structure of the reactor cell since the reactor cell becomes wedged conforming to the walls of the housing in the conical area. The reactor cells are well anchored to the housing by the conical walls even without any grooves on the surface of the housing or welded joints. The conical housing may have the shape of a truncated cone, truncated angular cone or cylinder. The shape thereof may be symmetrical or unsymmetrical.

In a conical housing, in the direction of the gas flow, since the cross section of the upsteam end of the housing is smaller than that of the middle part thereof, turbulence at the inlet end of the housing is low. This improves the efficiency of the operation of the reactor cell and brings about relatively low flow resistances. The cone angle of a conical housing is typically 3 to 30 degrees.

A second conical housing may be joined to a first conical housing abutting on it, or two conical reactor cells abutting against each other may be inserted into a housing tapering conically at both ends. Such reactor cells are made particularly effective by using in the reactor cells such corrugated sheets that are joined together at an oblique directional angle relative to the corrugations and by joining the reactor cells together in such a way that the sheets are at least partially transversely orientated.

The pressure loss at the upstream end of the reactor cell is particularly significant. In a cylindrical reactor cell, the pressure loss at the upstream end may even be half of the total pressure loss in the reactor cell. The pressure loss at the upstream end of the cone crucially depends on the ratio of the cross section of the feed line to that of the inlet end of the reactor cell. This ratio is favorable in a reactor cell tapering towards the inlet end. In this case, the turbulence of the flow will decrease, the pressure loss being significantly lower.

Reactor cells or housings having other shapes may be combined with conical housings. It is for instance contemplated to use a housing conically tapering towards both ends and having a straight middle section.

The corrugated sheets of the conical reactor cell preferably have corrugations that are higher at one end than at the other. Such sheets may for instance have at one end U-shaped grooves with low profiles that continuously change their shapes to form higher V-shaped grooves towards the other end of the sheet. By selecting a suitable height difference of the corrugations, the reactor cell may be assembled of intact sheets welded together, thus obtaining a reactor cell with a high mechanical strenght that may be manufactured in a simple way.

### Detailed Description of the Invention

Now some embodiments of the present invention will be described in more detail with reference to the appended drawings.

Figure 1 shows a structure of a reactor cell.

Figure 2 shows a reactor cell with profiled sheets.

Figure 3 shows two reactor cells joined together.

Figure 4 shows a reactor cell inserted into a housing by means of connecting grooves and weld joints.

Figure 5 shows a reactor cell inserted into a conical housing.

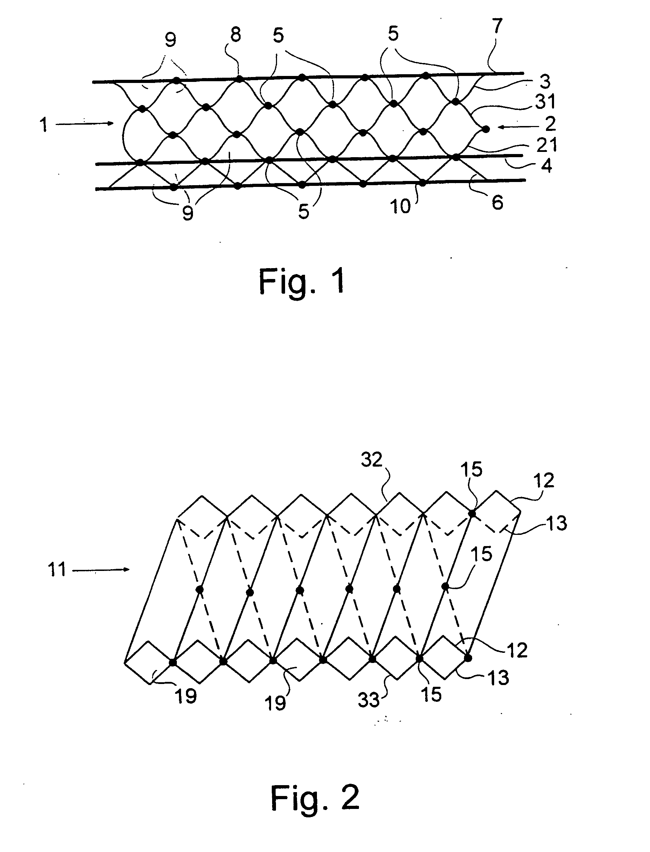

In figure 1, a reactor cell 1 comprises a corrugated sheet 2 joined at corrugations 31 to another corrugated sheet 3 thereupon and to a flat sheet 4 thereunder with joints 5. The corrugated sheet 2 is a profiled sheet with corrugations, having a thickness of about 0.1 mm, the height of the corrugations being about 1 mm. The corrugated sheet 2 is also joined at corrugations 31 to the bent section thereof. The reactor cell is inserted into a housing 7. The reactor cell 1 comprises on the bottom as a corrugated sheet 6 a sheet having V-shaped profiles and joined at joints 5 to the flat sheet 4. Channels 9 through which the gas being treated is passed are formed between the sheets 2, 3, 4, 6. The joints 5 between the sheets are spaced apart by 0.5 to 1.5 mm intervals. The corrugated sheet 3 is also connected to the housing 7 by weld joints 8, 10. The joints 5, 8, 10 are preferably made by resistance welding.

In figure 2, the reactor cell 11 comprises overlapping corrugated sheets 12, 13, these sheets being profiled sheets. The corrugated sheets 12, 13 are joined together with joints 15 to form an angle of about 30 degrees between the corrugations 32 of the sheet 12 and the corrugations 33 of the sheet 13. The gas being treated flows in channels 19 parallel to corrugations 32, 33 and is continuously mixed.

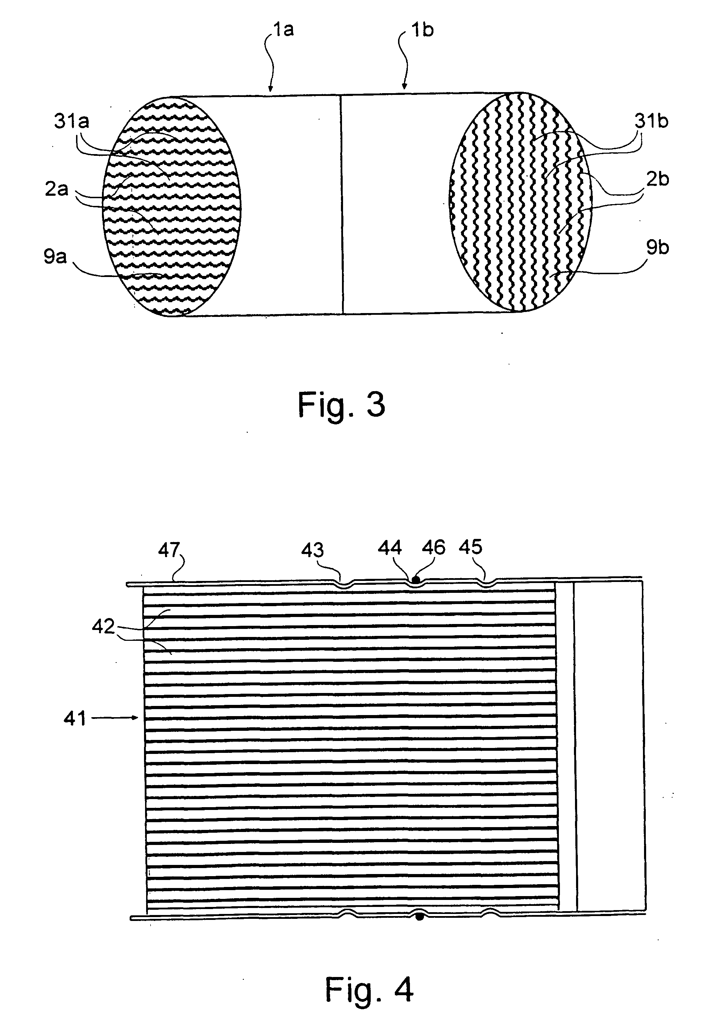

In figure 3, a reactor cell 1a having profiled sheets 2a and another reactor cell 1b also having profiled sheets 2b are combined together. The reactor cells 1a and 1b are joined to place the profiled sheets 2a, 2b of the reactor cells 1a, 1b, respectively, to an angle of 90 degrees relative to each other. The profiled sheets 2a are joined together to place the corrugations 31a of the sheets 2a transversely to each other, and similarly, the profiled sheets 2b are joined to each other to place the corrugations 31b of the sheets 2b transversely to each other. The gas being treated may flow in the channels 9a of the reactor cell 2a and in the channels 9b of the reactor cell 2b. In channels 9a, 9b, the gases are internally mixed in directions perpendicular to each other. Thus the gas passing through the reactor cells 2a, 2b is mixed in both directions very efficiently.

In figure 4, a reactor cell 41 is inserted into a housing 47. The reactor cell 41 is connected to the housing 41 by means of connecting grooves 43, 44, 45 on the housing wall. The connecting grooves are engaged with the sheets 42 of the reactor cell 41. A weld joint is further made on the bottom of the connecting groove. The reactor cell 41 is joined to the housing 47 not only with the connecting grooves 43, 44, 45 but also with the weld joint 46. Above connecting method is particularly stable since both the connecting grooves 43, 44, 45 and the weld joint are engaged with the sheets 42 of the reactor cell 41.

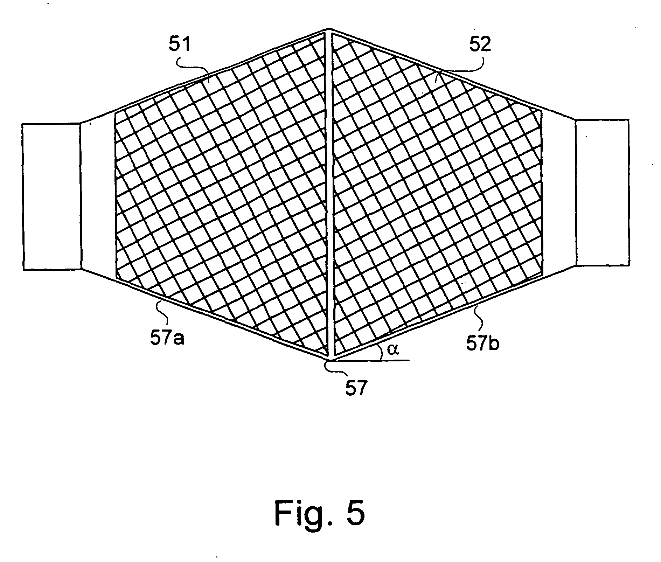

In figure 5, reactor cells 51, 52 manufactured by the method of the invention are inserted to a housing 47 that is conical at both ends. The reactor cells 51, 52 are wedged both against the walls 57a, 57b of the housing 57 and against each other when exposed to the flow pressure of the gas being treated. The reactor cells 51, 52 are wedged towards the walls 57a, 57b of the housing also by the thermal expansion due to the treatment of gases at high temperatures, thus engaging them firmly with the housing 57. The cone angle α of the conical sections of the housing 57 is about 7 degrees. Pressure and power losses due to turbulences of the gas flow and shortcut flows in the conical housing 57 and the reactor cell 51 are particularly low.

An embodiment of the reactor cell manufactured by the method of the invention (Kemira) and some commercially available reactor cells were subjected to a comparative mechanical resistance test (Cycle 2010). The reactor cell 42 comprised corrugated sheets 2, 3 with oblique profiles joined together by resistance welding at an angle of 40 degrees relative to the profiles 31, 32, 33, the joint density being 200 joints/cm³. The reactor cell was inserted into a cylindrical housing 47 and connected thereto by means of three connecting grooves 43, 44, 45. Further, a weld joint 46 was formed on the bottom of one of the connecting grooves using laser welding.

The reactor cells being tested were connected to an exhaust manifold of an engine (Saab 2,0L 16-V) on a motor test bench. Following the installations, the engine was started and allowed to warm up with partial load until the thermostat of the engine levelled off. In the test, full load and idle running cycles of 50 seconds, respectively, were repeated. In the full load cycle, the initial number of revolutions of 5500 rmp was lowered to 4700 rpm before the idle running cycle. During the full load, pressurized air was fed upstream of the reactor cell in an amount sufficient to raise the temperature therein to about 1020 °C. In the idle running cycle, the pressurized air feed was higher to lower the temperature below 400 °C quickly.

High mechanical stress of the cycle is due to high temperature, high gas flow, strong gas impulses, rapid temperature changes, and vibrations of the engine transferred via the exhaust manifold. The cycle was interrupted every 5 hours and the reactor cells being tested were checked. In some cases the test was stopped earlier if the reactor cell was already mechanically damaged. The results of these comparative tests are as follows:

| **Reactor cell** | **Time and result** |
|---|---|
| Kemira nailed spherical | 5 h, damaged |
| Nippon Steel | 10 h, damaged |
| Soldered Emitec | 5,5 h, damaged |
| Soldered Emitec | 5 h, damaged |
| Kemira WMC | 50 h undamaged |

According to the test results, the Kemira embodiment of the reactor cell of the invention withstood the test conditions undamaged at least 5 to 10 times longer than the control reactor cells.

## Claims

1. A method for manufacturing a metal reactor cell comprising overlapping corrugated sheets (2, 3, 12, 13) formed for instance from a sheet strip by winding, folding, or cutting and stacking, and said reactor cell (1,11, 41) optionally comprising other sheets (4, 6) such as flat sheets, perforated sheets and/or mesh sheets, and said reactor cell (1, 11, 41) has a housing (7, 47), and said reactor cell (1, 11, 41) further comprising channels (9, 19) between the overlapping sheets (2, 3, 4, 6, 12, 13), **characterized in that** the method comprises the steps of:
- preoxidizing said sheets (2, 3, 4, 6, 12, 13), and after preoxidation
- joining said preoxidatid sheets (2, 3, 4, 6, 12, 13) by resistance welding to each other, to the housing (7, 47) and/or to a part of the housing (7, 47).

2. A method according to claim 1, **characterized in that** preoxidation is made by annealing said sheets (2, 3, 4, 6, 12, 13) for 0.1 - 10 hours at the temperature of 500 - 1000 °C, preferably for 1 - 3 hours at 700 - 800 °C.

3. A method according to claim 1 or 2, **characterized in that** the method further comprises the steps of:
- joining a sheet (42) of the reaction cell (41) to the housing (7, 47) by one or several connecting grooves (43, 44, 45) on the surface of the housing (7, 47), which is such that when making the connecting groove (43, 44, 45) said connecting groove will orientate a sheet (42) of the reactor cell (41) parallel to the inside of the housing (7, 47), and
- connecting said sheet (42) also to the housing (7, 47) with one or several weld joints (46) made on the bottom of the connecting groove (43, 44, 45) through the housing (7, 47).

4. A method according to claim 3, **characterized in that** said connecting groove (43, 44, 45) comprises one or several weld joint(s) (46).

5. A method according to claims 3-4, **characterized in that** the depth and/or height of said connecting groove (43, 44, 45) is 0.5 to 2.0 mm.

6. A method according to any of the above claims, **characterized in that** said corrugated sheet (2, 3, 6, 12, 13) is a profiled sheet.

7. A method according to any of the above claims, **characterized in that** said reactor cell (1, 11, 41) comprises the overlapping corrugated sheets (2, 3, 12, 13) having corrugations (31, 32, 33) at an angle of 10 to 60 degrees relative to each other.

8. A method according to any of the above claims, **characterized in that** said reactor cell (1a) is combined with another reactor cell (1b), said sheets (2a, 2b) of said reactor cells (1a, 1b) being oriented in different directions relative to each other.

9. A method according to any of the above claims, **characterized in that** said reactor cell (51, 52) comprises a conical section, said reactor cell (51, 52) being inserted into a housing (57) having a conical section substantially conforming to the conical section of the reactor cell (51, 52).

10. A reactor cell for the treatment of gases, **characterized in that** the reactor cell (1,11, 41) is made by a method according to claims 1-9.

11. Use of the reactor cell according to claim 10, **characterized in that** said reactor cell (1, 41, 51, 52) is used to purify combustion gases such as exhaust gases or flue gases.

## Patentansprüche

1. Verfahren zur Herstellung einer Metallreaktorzelle mit übereinanderliegenden gewellten Blechen (2, 3, 12, 13), die z.B. aus einer Blechbahn durch Aufwickeln, Falten oder Schneiden und Stapeln gebildet ist, und wobei die Reaktorzelle (1, 11, 41) optional andere Bleche (4, 6) wie etwa flache Bleche, Lochbleche und/oder Siebbleche aufweist und wobei die Reaktorzelle ein Gehäuse (7, 47) hat, und die Reaktorzelle ferner Kanäle (9, 19) zwischen den übereinanderliegenden Blechen (2, 3, 4, 6, 12, 13) aufweist, **dadurch gekennzeichnet, dass** das Verfahren die Schritte aufweist:
Voroxidieren der Bleche (2, 3, 4, 6, 12, 13), und nach dem Voroxidieren
Befestigen der voroxidierten Bleche (2, 3, 4, 6, 12, 13) durch Widerstandsschweißen aneinander, an dem Gehäuse (7, 47) und/oder an einem Teil des Gehäuses (7, 47).

2. Verfahren nach Anspruch 1, **dadurch gekennzeichnet, dass** die Voroxidierung durch Glühen der Bleche (2, 3, 4, 6, 12, 13) für 0,1 bis 10 Stunden bei der Temperatur von 500 bis 1000°C durchgeführt wird, vorzugsweise für 1 bis 3 Stunden bei 700 bis 800°C.

3. Verfahren nach Anspruch 1 oder 2, **dadurch gekennzeichnet, dass** das Verfahren weiter die Schritte aufweist:
Befestigen eines Blechs (42) der Reaktionszelle (41) an dem Gehäuse (7, 47) mittels einer oder mehrerer Verbindungsnuten (43, 44, 45) an der Oberfläche des Gehäuses (7, 47), was dergestalt ist, dass bei Vorsehen der Verbindungsnüten (43, 44, 45) die Verbindungsnut ein Blech (42) der Reaktorzelle (41) parallel zur Innenseite des Gehäuses (7, 47) orientiert und
Befestigen des Blechs (40) auch an dem Gehäuse (7, 47) mit einer oder mehreren Schweißverbindungen (46), die am Boden der Verbindungsnut (43, 44, 45) durch das Gehäuse (7, 47) erzeugt wird.

4. Verfahren nach Anspruch 3, **dadurch gekennzeichnet, dass** die Verbindungsnut (43, 44, 45) eine oder mehrere Schweißverbindungen (46) aufweist.

5. Verfahren nach Ansprüchen 3 bis 4, **dadurch gekennzeichnet, dass** die Tiefe und/oder Höhe der Verbindungsnut (43, 44, 45) zwischen 0,5 und 2 mm liegt.

6. Verfahren nach einem der vorhergehenden Ansprüche, **dadurch gekennzeichnet, dass** das gewellte Blech (2, 3, 6, 12, 13) ein profiliertes Blech ist.

7. Verfahren nach einem der vorhergehenden Ansprüche, **dadurch gekennzeichnet, dass** die Reaktorzelle (1, 11, 41) übereinanderliegende gewellte Bleche (2, 3, 12, 13) aufweist, die Wellen (31, 32, 33) unter einem Winkel von 10 bis 60° relativ zueinander haben.

8. Verfahren nach einem der vorhergehenden Ansprüche, **dadurch gekennzeichnet, dass** die Reaktorzelle (1a) mit einer anderen Reaktorzelle (1b) kombiniert ist, wobei die Bleche (2a, 2b) der Reaktorzellen (1a, 1b) in unterschiedlichen Richtungen relativ zueinander orientiert sind.

9. Verfahren nach einem der vorhergehenden Ansprüche, **dadurch gekennzeichnet, dass** die Reaktorzelle (51, 52) einen kegelförmigen Abschnitt umfasst, wobei die Reaktorzelle (51, 52) in ein Gehäuse (57) mit einem kielförmigen Abschnitt eingesetzt wird, dessen Form im Wesentlichen mit dem kegelförmigen Abschnitt der Reaktorzelle (51, 52) übereinstimmt.

10. Reaktorzelle für die Behandlung von Gasen, **dadurch gekennzeichnet, dass** die Reaktorzelle (1, 11, 41) durch ein Verfahren gemäß Ansprüche 1 bis 9 hergestellt ist.

11. Verwendung der Reaktorzelle gemäß Anspruch 10, **dadurch gekennzeichnet, dass** die Reaktorzelle (1, 41, 51, 52) zur Reinigung von Verbrennungsgasen wie Auspuffgasen oder Rauchgasen verwendet wird.

## Revendications

1. Procédé pour fabriquer une cellule de réacteur en métal comprenant des feuilles ondulées superposées (2, 3, 12, 13) formées par exemple à partir d'une feuille d'acier par enroulement, pliage, ou découpe et empilement, ladite cellule de réacteur (1, 11, 41) comprenant de façon optionnelle d'autres feuilles (4, 6) telles que des feuilles plates, des feuilles perforées et/ou des feuilles en treillis, et ladite cellule de réacteur (1, 11, 41) comprenant un boîtier (7, 47), et ladite cellule de réacteur (1, 11, 41) comprenant de plus des canaux (9, 19) entre les feuilles superposées (2, 3, 4, 6, 12, 13), **caractérisé en ce que** le procédé comprend les étapes consistant à :
- préoxyder lesdites feuilles (2, 3, 4, 6, 12, 13), et, après la préoxydation,
- réunir lesdites feuilles préoxydées (2, 3, 4, 6, 12, 13) par soudage par résistance l'une à l'autre, au boîtier (7, 47) et/ou à une partie du boîtier (7, 47).

2. Procédé selon la revendication 1, **caractérisé en ce que** la préoxydation est effectuée par recuit desdites feuilles (2, 3, 4, 6, 12, 13) pendant 0,1 à 10 heures à une température comprise entre 500 et 1000°C , et, de préférence, pendant 1 à 3 heures entre 700 et 800° C.

3. Procédé selon la revendication 1 ou 2, **caractérisé en ce que** le procédé comprend de plus les étapes consistant à :
- réunir une feuille (42) de la cellule de réaction (41) au boîtier (7, 47) par une ou plusieurs rainures de raccordement (43, 44, 45) sur la surface du boîtier (7, 47), qui est telle que, lors de la réalisation de la rainure de raccordement (43, 44, 45), ladite rainure de raccordement oriente une feuille (42) de la cellule de réacteur (41) parallèlement à l'intérieur du boîtier (7, 47), et
- raccorder ladite feuille (42) également au boîtier (7, 47), avec un ou plusieurs raccords de soudure (46) réalisés sur le bas de la rainure de raccordement (43, 44, 45) à travers le boîtier (7, 47).

4. Procédé selon la revendication 3, **caractérisé en ce que** ladite rainure de raccordement (43, 44, 45) comprend un ou plusieurs raccord(s) de soudure (46).

5. Procédé selon les revendications 3 à 4, **caractérisé en ce que** la profondeur et/ou la hauteur de ladite rainure de raccordement (43, 44, 45) sont comprises entre 0,5 et 2,0 mm.

6. Procédé selon l'une quelconque des revendications ci-dessus, **caractérisé en ce que** ladite feuille ondulée (2, 3, 6, 12, 13) est une feuille profilée.

7. Procédé selon l'une quelconque des revendications ci-dessus, **caractérisé en ce que** ladite cellule de réacteur (1, 11, 41) comprend les feuilles ondulées superposées (2, 3, 12, 13) comportant des ondulations (31, 32, 33) à un angle compris entre 10 et 60 degrés les unes par rapport aux autres.

8. Procédé selon l'une quelconque des revendications ci-dessus, **caractérisé en ce que** ladite cellule de réacteur (1a) est combinée à une autre cellule de réacteur (1b), lesdites feuilles (2a, 2b) desdites cellules de réacteur (1a, 1b) étant orientées dans des directions différentes les unes par rapport aux autres.

9. Procédé selon l'une quelconque des revendications ci-dessus, **caractérisé en ce que** ladite cellule de réacteur (51, 52) comprend une section conique, ladite cellule de réacteur (51, 52) étant insérée dans un boîtier (57) ayant une section conique se conformant sensiblement à la section conique de la cellule de réacteur (51, 52).

10. Cellule de réacteur pour le traitement de gaz, **caractérisée en ce que** la cellule de réacteur (1, 11, 41) est réalisée à l'aide d'un procédé selon les revendications 1 à 9.

11. Utilisation de la cellule de réacteur selon la revendication 10, **caractérisée en ce que** ladite cellule de réacteur (1, 41, 51, 52) est utilisée pour purifier des gaz de combustion tels que des gaz d'échappement ou des gaz de combustion.
